(19) Europäisches Patentamt
European Patent Office
Office européen des brevets

(11) Veröffentlichungsnummer: **0 152 803**
**A2**

(12) # EUROPÄISCHE PATENTANMELDUNG

(21) Anmeldenummer: **85100761.7**

(22) Anmeldetag: **25.01.85**

(51) Int. Cl.⁴: **C 07 F 7/14**

(30) Priorität: **10.02.84 DE 3404703**

(43) Veröffentlichungstag der Anmeldung: **28.08.85**
**Patentblatt 85/35**

(84) Benannte Vertragsstaaten: **AT BE CH FR GB IT LI NL**

(71) Anmelder: **Degussa Aktiengesellschaft,**
**Weissfrauenstrasse 9, D-6000 Frankfurt am Main 1 (DE)**

(72) Erfinder: **Panster, Peter, Dr., Im Lochseif 8,**
**D-6458 Rodenbach (DE)**
Erfinder: **Michel, Rudolf, Josefstrasse 36,**
**D-6464 Freigericht (DE)**
Erfinder: **Buder, Wolfgang, Dr. Lot. Pedra do Sal/Itapoan, Rua do Lagarto Azul No.1000,**
**40.000 Salvador - Bahia (BR)**
Erfinder: **Kleinschmit, Peter, Dr., Wildaustrasse 19,**
**D-6450 Hanau 9 (DE)**

(54) **Verfahren zur Herstellung von 3-Chlorpropyltrichlorsilan.**

(57) Die Erfindung betrifft ein Verfahren zur Herstellung von 3-Chlorpropyltrichlorsilan durch Umsetzung von Trichlorsilan mit Allylchlorid in Gegenwart einer Platin-haltigen polymeren Organosiloxan-Ammoniumverbindung aus Einheiten

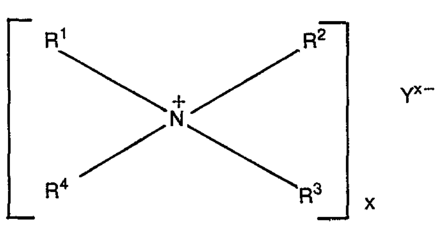

(1)

in der $R^1$, $R^2$ und $R^3$ für eine Gruppe

$R^5$-$SiO_{3/2}$ (2)

stehen, wobei $R^5$ eine Alkylengruppierung ist und die freien Valenzen der Sauerstoffatome durch Siliciumatome weiterer Gruppen (2), gegebenenfalls unter Einbau von Vernetzern, abgesättigt sind, $R^4$ die Bedeutung von $R^1$, $R^2$, $R^3$ oder von Wasserstoff, einer Alkyl-, Cycloalkyl- oder Benzylgruppe hat, $Y^{x-}$ für $PtX_4^{2-}$ oder $PtX_6^{2-}$ (X= Cl oder Br) und für ein anorganisches, 1- bis 3-wertiges Anion einer mit Aminbasen stabile Salze bildenden Protonensäure oder die Hydroxylgruppe steht und x eine Zahl von 1 bis 3 sein kann.

EP 0 152 803 A2

Degussa Aktiengesellschaft
Weißfrauenstraße 9, 6000 Frankfurt/Main

# Verfahren zur Herstellung von 3-Chlorpropyltrichlorsilan

Die Erfindung betrifft ein Verfahren zur Herstellung von 3-Chlorpropyltrichlorsilan, nach dem dieses wichtige Zwischenprodukt in hoher Ausbeute, unter Einsatz vergleichsweise geringen Trichlorsilan-Überschusses und unter stark reduziertem Anfall von unerwünschten Si-haltigen Nebenprodukten erhalten werden kann. Das erfindungsgemäße Verfahren beinhaltet den Einsatz von neuen, in der parallel eingereichten Patentanmeldung (wird nach Vorliegen des Aktenzeichens ergänzt) näher beschriebenen Hydrosilylierungskatalysatoren, die unter den gewählten Bedingungen eine selektive Hydrosilylierung von allylischen Doppelbindungen und damit die bevorzugte Bildung des gewünschten Produktes ermöglichen.

3-Chlorpropyltrichlorsilan ist ein wichtiges technisches Zwischenprodukt in der Organosilanchemie. Durch Veresterung der Si-Cl-Funktionen mit Alkoholen und gegebenenfalls durch Substitutionsreaktionen an der C-Cl-Einheit können aus dieser Verbindung weitere wichtige Organosilane, z. B. das Bis(3-triethoxysilylpropyl)tetrasulfan, erhalten werden,

die überwiegend als Haftvermittler zwischen anorganischen und organischen Polymersystemen eingesetzt werden.

Nach den gängigen technischen Verfahren erfolgt die Herstellung von 3-Chlorpropyltrichlorsilan durch Anlagerung von Trichlorsilan an Allylchlorid in Gegenwart von Hydrosilylierungskatalysatoren aus elementarem Platin, das auf einen Kohlenstoffträger aufgebracht ist (vgl. US-P 2,637,738; DE-PS 20 12 229; DE-PS 28 15 316) oder aus einer löslichen Platinverbindung, im einfachsten Falle z. B. $H_2PtCl_6 \cdot 6H_2O$ (vgl. DE-OS 28 51 456, CS-PS 187 167, US-P 4,292,433; US-P 4,292,434; DE-AS 11 87 240; DE-PS 11 65 028).

Während die heterogenen Katalysatorsysteme beim technischen Einsatz die Vorteile der leichten Abtrennbarkeit und Recyclierbarkeit besitzen und das wertvolle Platin leichter zurückgewinnen lassen, sind die homogen eingesetzten Pt-Katalysatoren etwas aktiver, auch geringfügig selektiver und besser reproduzierbar herzustellen. Ihre Abtrennung aus dem Reaktionsmedium und die Rückgewinnung des Platins ist jedoch aufwendig und problematisch. Allen Hydrosilylierungskatalysatoren, die bisher zur Addition von Trichlorsilan an Allylchlorid eingesetzt wurden, ist jedoch gemeinsam, daß sie neben dem gewünschten Produkt 3-Chlorpropyltrichlorsilan stets auch beträchtliche Mengen an dem unerwünschten Nebenprodukt Propyltrichlorsilan bilden, denn neben der Hydrosilylierungsreaktion nach Gleichung (I)

$$Cl\text{-}CH_2\text{-}CH = CH_2 \quad + \quad HSiCl_3 \longrightarrow Cl\text{-}CH_2\text{-}CH_2\text{-}CH_2\text{-}SiCl_3 \quad (I)$$

läuft hier mit einem Anteil von 25 - 30 Mol % auch eine Reduktion des Allylchlorids zu Propen gemäß Gleichung (II)

$$Cl\text{-}CH_2\text{-}CH = CH_2 \quad + \quad HSiCl_3 \longrightarrow CH_3\text{-}CH = CH_2 + SiCl_4 \quad (II)$$

ab.

Aufgrund der geringen Selektivität der bisher bekannten Hydrosilylierungskatalysatoren in bezug auf die Hydrosilylierung der allylischen Doppelbindung, reagiert das gebildete Propen sofort in Konkurrenz zu Allylchlorid mit vorhandenem Trichlorsilan unter Bildung von Propyltrichlorsilan gemäß Gleichung (III).

$$CH_3-CH = CH_2 \ + \ HSiCl_3 \longrightarrow CH_3-CH_2-CH_2SiCl_3 \qquad (III)$$

Als Konsequenz dieser geringen Selektivität wird, um eine vollständige Abreaktion des eingesetzten Allylchlorids zu erzielen, stets ein Überschuß von mindestens 25 - 30 Mol % Trichlorsilan benötigt und es fällt neben dem noch verwertbaren Siliciumtetrachlorid das häufig nicht oder nur schwer verwertbare Propyltrichlorsilan an.

Es konnte nun ein neues Hydrosilylierungsverfahren gefunden werden, nach dem das gewünschte Produkt 3-Chlorpropyltrichlorsilan in hoher Ausbeute, unter Einsatz eines nur geringen Trichlorsilan-Überschusses und unter stark verringertem Anfall des unerwünschten Nebenprodukts Propyltrichlorsilan sowie unter vergleichsweise geringer Bildung von Siliciumtetrachlorid erhalten werden kann.

Dieses Verfahren ist dadurch gekennzeichnet, daß Trichlorsilan und Allylchlorid miteinander in Gegenwart einer Platin-haltigen polymeren Organosiloxan-Ammoniumverbindung, bestehend aus Einheiten der allgemeinen Formel

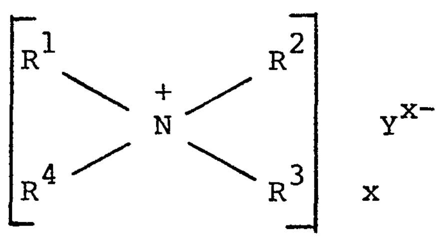

(1)

umgesetzt werden, wobei $R^1$, $R^2$ und $R^3$ für eine Gruppe der allgemeinen Formel (2) stehen,

$$R^5 - SiO_{3/2} \qquad (2)$$

in der $R^5$ wiederum für eine lineare oder verzweigte Alkylengruppe mit 1 bis 12 C-Atomen, eine Cycloalkylengruppe mit 5, 7 oder 8 C-Atomen oder für Einheiten

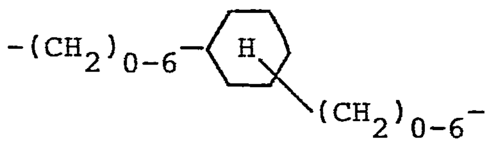 bzw. 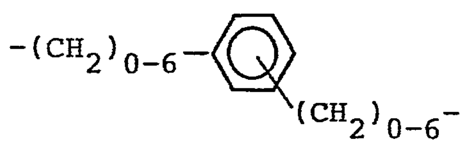

steht, $R^1$, $R^2$ und $R^3$ gleich oder verschieden sein können und die freien Valenzen der Sauerstoffatome entweder durch Siliciumatome weiterer Gruppen der Formel (2) und/ oder durch vernetzende Brückenglieder der Formeln

$$SiO_{4/2} \quad oder \quad SiR'O_{3/2} \quad oder \quad SiR'_2O_{2/2} \qquad (3)$$

abgesättigt sind, wobei R' für eine Methyl- oder Ethylgruppe steht und das Verhältnis zwischen den Siliciumatomen in Formel (2) zu den Siliciumatomen der Brückeneinheiten nach Formeln (3) von 1 : 0 bis 1 : 10 betragen kann,

$R^4$ denselben Bedeutungsumfang haben kann wie $R^1$, $R^2$ und $R^3$ oder für Wasserstoff, eine 1 bis 10 C-Atome enthaltende lineare oder verzweigte Alkylgruppe, eine 5 bis 8 C-Atome enthaltende Cycloalkyl- oder die Benzylgruppe steht,

$Y^{x-}$ für $PtCl_4^{2-}$ oder $PtCl_6^{2-}$

$PtBr_4^{2-}$ oder $PtBr_6^{2-}$

und für ein anorganisches, 1- bis 3-wertiges Anion einer

anorganischen Protonensäure, die mit Aminbasen stabile Salze zu bilden imstande ist, oder die Hydroxygruppe steht und

x eine Zahl von 1 bis 3 bedeutet.

Im Polymerverband können verschiedene Einheiten nach Formel (1) nebeneinander vorliegen, sofern sich dies hinsichtlich der katalytischen Eigenschaften als vorteilhaft erweist.

Typische Beispiele für anorganische 1- bis 3-wertige Anionen, die neben den komplexen Anionen des Platins in der polymeren Organosiloxan-Ammoniumverbindung vorliegen können, sind Chlorid, Bromid, Jodid, Sulfat, Nitrat, Phosphat oder Carbonat. Das molare Verhältnis zwischen den komplexen Anionen des Platins und diesen anorganischen Anionen bzw. Hydroxid kann 1 : 0 bis 1 : 50 betragen, besonders bevorzugt ist jedoch unter dem Gesichtspunkt der Erzielung einer möglichst hohen Aktivität und Selektivität ein Verhältnis von 1 : 0 bis 1 : 10.

Der Einbau der Silicium-haltigen Vernetzer dient einer Steuerung der Platindichte im Feststoff sowie einer Steuerung der spezifischen Oberfläche, mit der wiederum Einfluß auf die Aktivität und Selektivität des Katalysators genommen werden kann.

Nach einer vorzugsweisen Ausführungsform der Erfindung sind bei dem verwendeten Katalysator nach Formel (1) $R^1$, $R^2$ und $R^3$ miteinander identisch und $R^4$ ist gleich Methyl.

Besondere Vorteile bezüglich der Verfügbarkeit der Ausgangsmaterialien und der stofflichen Eigenschaften der beim erfindungsgemäßen Verfahren verwendeten Katalysatoren liegen bei Verbindungen, aufgebaut aus Polymereinheiten

der Formel

$$\left[(H_3C)N(CH_2CH_2CH_2SiO_{3/2})_3\right]^{+}_{x} \quad Y^{x-} \qquad (4)$$

vor, in der $Y^{x-}$ für $PtCl_4{}^{2-}$ und für Chlorid steht, und die freien Valenzen der Si-ständigen Sauerstoffatome entweder durch Siliciumatome weiterer Gruppen der Formel (4) und/oder durch vernetzende Brückenglieder der Formel $SiO_{4/2}$ abgesättigt sind, wobei das Verhältnis zwischen den Si-Atomen in (4) zu den Si-Atomen der Brückenglieder $SiO_{4/2}$ von 1 : 0,1 bis 1 : 10 betragen kann.

Die Platinkonzentration im Feststoff kann theoretisch wenige ppm bis über 20 Gew.% hinaus betragen; für den praktischen Einsatz erweist sich jedoch ein Pt-Gehalt von 2 - 20 Gew.% als vorteilhaft.

Obwohl die verwendeten Hydrosilylierungskatalysatoren nach Formel (1) prinzipiell auch als Festbettkontakt, z. B. im Schlaufenreaktor, eingesetzt werden können, gestattet das erfindungsgemäße Verfahren mit Vorteil ihre Verwendung als Suspensionskatalysator, wobei der Katalysator in der bewegten flüssigen Phase des Gemisches der Reaktionskomponenten, bestehend im wesentlichen aus Chlorpropyltrichlorsilan, Siliciumtetrachlorid und geringen Mengen Propyltrichlorsilan und/oder den Ausgangskomponenten Trichlorsilan und Allylchlorid, eingesetzt wird. Diese Verfahrensweise hat den Vorteil, daß der Katalysator in relativ feinteiliger Form angewandt werden kann und Diffusionsprobleme vermieden werden, was wiederum der Katalysatoraktivität zugute kommt. Daneben begünstigt der Einsatz als Suspensionskatalysator die von Hause aus schon gegebene hohe Selektivität der nach dem erfindungsgemäßen Hydrosilylierungsverfahren zu verwendenden Katalysatoren

in der Weise, daß das in der gleichzeitig ablaufenden Nebenreaktion gebildete Propen sofort nach seiner Bildung aus der Lösung entweichen kann und durch die kurze Verweilzeit in Lösung kaum Gelegenheit erhält, mit gleichzeitig anwesendem Trichlorsilan weiter zu dem unerwünschten Nebenprodukt Propyltrichlorsilan zu reagieren. Die Anwendung von Überdruck ist somit nicht erforderlich, obwohl Überdruck aufgrund der hohen Selektivität der verwendeten Katalysatoren prinzipiell anwendbar ist.

Das erfindungsgemäße Verfahren kann prinzipiell ohne wesentlichen Einfluß auf die Produktbildung kontinuierlich oder diskontinuierlich durchgeführt werden. Im Hinblick auf eine rationelle technische Praktizierung mit großen Mengendurchsätzen erweist sich jedoch die kontinuierliche Verfahrensweise als überlegen. Dabei muß aber darauf geachtet werden, daß für eine quantitative Umsetzung der Ausgangskomponenten Trichlorsilan und Allylchlorid zum gewünschten Produkt 3-Chlorpropyltrichlorsilan eine ausreichende Verweilzeit gegeben ist.

In der Praxis gestaltet sich diese kontinuierliche Betriebsweise am einfachsten so, daß der Katalysator in dem Gemisch der bereits vorstehend genannten Reaktionskomponenten nach üblichen Techniken, z. B. durch Rühren, bewegt wird und die beiden Ausgangskomponenten gleichzeitig, jede für sich oder bereits vorgemischt, zu dieser Mischung zudosiert werden. Parallel zur Zudosierung wird an einer geeigneten Stelle des Reaktors, evtl. unter Zwischenschaltung einer zur Abtrennung des Katalysators geeigneten Vorrichtung die Produktmischung aus dem Reaktor abgezogen. Das freigesetzte Propen läßt man über einen Kühler entweichen, der am besten mit Kühlsole mit einer Temperatur von $< 0°$ C gekühlt wird; es kann dann einer weiteren Verwendung zugeführt werden.

Im Hinblick auf die Erzielung eines möglichst hohen Durchsatzes ist es vorteilhaft, die Umsetzung von Trichlorsilan und Allylchlorid zu 3-Chlorpropyltrichlorsilan bei erhöhter Temperatur, vorzugsweise etwa bei Rückflußtemperatur der Reaktionsmischung, d. h. zwischen etwa 70 bis 130° C, vorzunehmen. Eine hohe Rückflußtemperatur der Reaktionsmischung ist das Kennzeichen einer hohen Katalysatorselektivität und eines hohen Umsetzungsgrades, sofern keiner der Reaktionspartner in größerem Überschuß eingesetzt wird.

Um eine vollständige Abreaktion des Allylchlorids zu erreichen, ist auch beim erfindungsgemäßen Verfahren ein geringer Überschuß an Trichlorsilan erforderlich. Dieser notwendige Überschuß beträgt 5 - 20 Mol % und liegt damit deutlich niedriger als im Fall bisher bekannter Verfahren.

Der Einsatz als Suspensionskatalysator hat bei kontinuierlichem Betrieb gegenüber dem Einsatz als Festbettkatalysator weiterhin den Vorteil, daß eine Teilausschleusung verbrauchten Katalysators und das Einbringen von frischem Katalysator ohne Unterbrechung des Betriebs möglich ist.

Dieser vorteilhafte Einsatz einer Suspension ist nur bei Verwendung der in dem erfindungsgemäßen Verfahren anzuwendenden Katalysatoren möglich, denn nur diese besitzen die notwendige Abriebbeständigkeit, um einen störungsfreien Betriebsablauf zu gewährleisten und nur in ihrem Fall liegt eine so hohe Konzentration an Platin vor, daß der katalytisch aktive Feststoffanteil in der Suspension relativ niedrig gehalten werden kann und trotzdem ein hoher Durchsatz erzielbar ist. Die Verwendung eines der üblichen Hydrosilylierungskatalysatoren mit einer Konzentration von max. 1 - 2 % Pt auf Kohle als Suspensionskatalysator ist im technischen Maßstab wegen des hohen Kohleabriebs und damit verbundenen Pt-Verlustes und wegen der erforderlichen

hohen Feststoffkonzentration im Reaktionsmedium nur bedingt möglich. Deren üblicher Einsatz als Festbettkatalysator untersützt keineswegs die ohnehin nicht sehr hohe Selektivität dieser Vertreter, so daß das freigesetzte Propen nahezu vollständig zu dem unerwünschten Nebenprodukt Propyltrichlorsilan abreagiert.

Die Erfindung wird nachfolgend anhand von Ausführungsbeispielen unter Berücksichtigung der grundsätzlich wichtigsten Katalysatortypen weiter erläutert.

Beispiel 1

Ein 2 l-Vierhalskolben, bestückt mit einem Innenthermometer, einem KPG-Rührer, einem Flüssigkeitseinlauf, einem durch eine Fritte versperrten Flüssigkeitsablauf und einem mit Kühlsole von -25° C gekühlten Intensiv-Rückflußkühler, der oben mit einem Gasauslaß versehen war, wurde mit 1,5 l 3-Chlorpropyltrichlorsilan und 37,4 g eines Hydrosilylierungskatalysators versetzt. Letzterer bestand aus einer Platin-haltigen polymeren Organosiloxan-Ammoniumverbindung mit Einheiten der Formel

$$\left[(H_3C)N(CH_2CH_2CH_2SiO_{3/2})_3\right]_2^{2+} PtCl_2^{2-}$$

und Einheiten der Formel

$$\left[(H_3C)N(CH_2CH_2CH_2SiO_{3/2})_3\right]^{+} Cl^{-} ,$$

einem Pt-Gehalt von 10,7 Gew.% und einer Korngröße von 0,05 - 0,2 mm. Durch Beheizen mit einem Heizpilz wurde die Temperatur der Mischung auf ca. 100° C und die Rührgeschwindigkeit des KPG-Rührers auf ca. 60 U/min. eingestellt.

Mit Hilfe einer Dosierpumpe wurde nun aus einem Vorratsgefäß mit einer stündlichen Leistung von 200 ml/h ein Allylchlorid/Trichlorsilan-Gemisch, das ein Molverhältnis von 1,0 : 1,1 aufwies, in den Reaktionskolben eindosiert, wobei gleichzeitig auf der gegenüberliegenden Seite des Gefäßes das Produktgemisch über die eingebaute Fritte, die den Katalysator zurückhielt, ausgetragen wurde. Das gebildete Propen konnte über den Kopf des Intensivkühlers aus dem Reaktorsystem entweichen und gelangte über ein Abtauchgefäß, das mit Weißöl gefüllt war, zunächst in eine Gasbürette und von hier über eine mit 2n-NaOH gefüllte Waschflasche ins Freie. Im Verlauf der zunächst erfolgenden Gleichgewichtseinstellung wurde die Temperatur im Reaktor stets so reguliert, daß die Mischung leicht siedete. Nach 30 Stunden Betriebsdauer lag die Siedetemperatur bei 106° C und es erfolgte über einen Zeitraum von 3 Stunden eine genaue Probenahme: Danach betrugen der Durchsatz an Produktgemisch 205 g/h und die Propenbildung ca. 0,17 Mol/h. Gemäß einer gaschromatographischen Untersuchung setzte sich die Produktmischung wie folgt zusammen:

2,6 Gew.% Trichlorsilan
0,3 Gew.% Allylchlorid
17,6 Gew.% $SiCl_4$
3,8 Gew.% Propyltrichlorsilan
74,5 Gew.% Chlorpropyltrichlorsilan
1,2 Gew.% sonstige Bestandteile

Demzufolge erlaubt die Grundselektivität des eingesetzten Katalysators eine Bildung des gewünschten Produktes 3-Chlorpropyltrichlorsilan zu 77,2 %. Dieser Wert entspricht damit auch in etwa der Ausbeute an Chlorpropyltrichlorsilan, bezogen auf eingesetztes Allylchlorid. Das in der Nebenreaktion gebildete Propen konnte den Analysen zufolge zu rund 80 % aus dem Reaktionsgemisch entweichen.

Nach 80 Stunden Betriebsdauer wurde bei gleicher stündlicher Leistung wiederum eine Probenahme durchgeführt. Diesmal setzte sich die Produktmischung wie folgt zusammen:

2,5 Gew.% Trichlorsilan
0,2 Gew.% Allylchlorid
18,3 Gew.% $SiCl_4$
3,6 Gew.% Propyltrichlorsilan
73,8 Gew.% Chlorpropyltrichlorsilan
1,6 Gew.% sonstige Bestandteile

Die Selektivität zu 3-Chlorpropyltrichlorsilan betrug jetzt 76,4 %. Das in der Nebenreaktion gebildete Propen konnte zu über 81 % aus dem Reaktionsgemisch entweichen. Der verwendete Katalysator zeigte auch nach dieser Zeit keine bedeutenden Abrieberscheinungen.

In einem Vergleichsversuch wurde ein herkömmlicher Platin/Kohle-Hydrosilylierungskatalysator unter analogen Bedingungen wie der vorstehend genannte Katalysator eingesetzt. Nach Einstellung des Gleichgewichts ergab eine GC-Analyse des Produktgemisches folgende Zusammensetzung:

0,0 Gew.% Trichlorsilan
1,2 Gew.% Allylchlorid
18,1 Gew.% $SiCl_4$
12,5 Gew.% Propyltrichlorsilan
63,6 Gew.% Chlorpropyltrichlorsilan
4,6 Gew.% sonstige Bestandteile

Die Selektivität zu 3-Chlorpropyltrichlorsilan betrug in diesem Fall nur 73,8 %. Nur 34 % des gebildeten Propens konnten aus dem Reaktionsgemisch entweichen und dies auch nur deshalb, weil kein Trichlorsilan mehr zur Hydrosilylierung zur Verfügung stand. Auch ein deutlich höherer Prozentsatz der Ausgangsverbindung Allylchlorid verblieb nun

unreagiert im Produktgemisch und der Katalysatorabrieb war nach einiger Zeit so beträchtlich, daß in diesem Fall kein technischer Dauerbetrieb nach diesem Konzept möglich ist.

Beispiel 2

Unter analogen Bedingungen wie in Beispiel 1 beschrieben wurde eine Reihe weiterer Platin-haltiger Organopolysiloxan-Ammoniumverbindungen als Katalysatoren bei der Trichlorsilan-Addition an Allylchlorid eingesetzt. Die dabei erzielten Ergebnisse sind in nachstehender Tabelle aufge-führt.

Tabelle

| | Polymereinheiten Katalysator | Pt Gew.% | Menge (g) | Mol-Verh. Allylchlorid / $HSiCl_3$ | Leistung $\frac{g}{h}$ Produktgem. |
|---|---|---|---|---|---|
| Beisp. 2 | $[(H_3C)N(CH_2CH_2CH_2SiO_{3/2})_3]_2^{2+}PtCl_4^{2-} \cdot 2SiO_2$ + $[(H_3C)N(CH_2CH_2CH_2SiO_{3/2})_3]^{+}Cl^{-}$ | 9,72 | 21,88 | 1 : 1,05 | 167 |
| Beisp. 3 | $\{(H_3C)_2CH-CH_2-N[(CH_2)_8SiO_{3/2}]_3\}_2^{2+}PtCl_6^{2-}$ + $\{(H_3C)_2CH-CH_2-N[(CH_2)_8SiO_{3/2}]_3\}_2^{2+}SO_4^{2-}$ | 1,52 | 28,5 | 1 : 1,1 | 52 |
| Beisp. 4 | $[N(CH_2CH_2CH_2SiO_{3/2})_4]_2^{2+}PtCl_4^{2-}$ + $[N(CH_2CH_2CH_2SiO_{3/2})_4]^{+}Cl^{-}$ | 4,25 | 23,53 | 1 : 1,2 | 60 |
| Beisp. 5 | $[(H_3C)N(CH_2CH_2CH_2SiO_{3/2})(CH_2$– 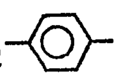 –$SiO_{3/2})_2]_2^{2+}PtCl_4^{2-} \cdot 3(C_2H_5)_2SiO$ | 10,5 | 9,52 | 1 : 1,1 | 96 |
| Beisp. 6 | $[HN(CH_2CH_2CH_2SiO_{3/2})_3]_2^{2+}PtCl_6^{2-} \cdot 2SiO_2 + N(CH_2CH_2CH_2SiO_{3/2})_3 \cdot SiO_2$ | 9,3 | 21,51 | 1 : 1,1 | 220 |
| Beisp. 7 | $\{(H_3C)N[(CH_2)_{10}SiO_{3/2}]_3\}_2^{+}PtBr_4^{2-}$ | 11,2 | 17,7 | 1 : 1,15 | 80 |

Fortsetzung Tabelle

| $HSiCl_3$ (Gew.%) | Produktgemisch-Zusammensetzung $C_3H_5Cl$ (Gew.%) | $SiCl_4$ (Gew.%) | $C_3H_7SiCl_3$ (Gew.%) | $Cl-C_3H_6-SiCl_3$ (Gew.%) | Sonst. (Gew.%) | Selekt.* (%) | Propen-** Freisetzung (%) |
|---|---|---|---|---|---|---|---|
| - | - | 19,5 | 6,3 | 74,0 | 0,2 | 75,3 | 69 |
| 3,1 | 0,2 | 18,0 | 3,7 | 74,2 | 0,8 | 76,8 | 80 |
| 4,9 | 0,3 | 16,9 | 2,9 | 73,7 | 1,3 | 77,8 | 84 |
| 2,8 | 0,1 | 18,1 | 3,2 | 74,8 | 1,0 | 76,8 | 83 |
| 2,9 | - | 17,0 | 4,6 | 74,6 | 0,9 | 77,9 | 74 |
| 3,8 | 0,2 | 19,2 | 2,6 | 73,8 | 0,4 | 75,5 | 87 |

* Selektivität der Bildung von Chlorpropyltrichlorsilan

** Anteil des freigesetzten Propen an insgesamt intermediär gebildetem Propen

D e g u s s a Aktiengesellschaft
Weißfrauenstraße 9, 6000 Frankfurt/Main

# Verfahren zur Herstellung von 3-Chlorpropyltrichlorsilan

## Patentansprüche

1. Verfahren zur Herstellung von 3-Chlorpropyltrichlorsilan, dadurch gekennzeichnet, daß Trichlorsilan und Allylchlorid miteinander in Gegenwart einer Platinhaltigen polymeren Organosiloxan-Ammoniumverbindung, bestehend aus Einheiten der allgemeinen Formel

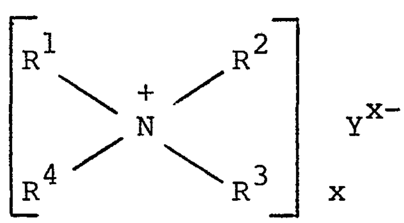 (1)

umgesetzt werden, wobei $R^1$, $R^2$ und $R^3$ für eine Gruppe der allgemeinen Formel

$$R^5 - SiO_{3/2} \qquad (2)$$

stehen, in der $R^5$ für eine lineare oder verzweigte Alkylengruppe mit 1 bis 12 C-Atomen, eine Cycloalkylengruppe mit 5, 7 oder 8 C-Atomen oder für Einheiten

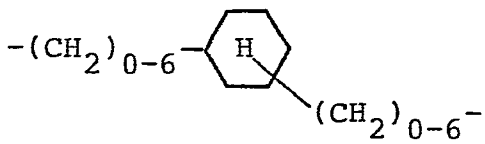 bzw. 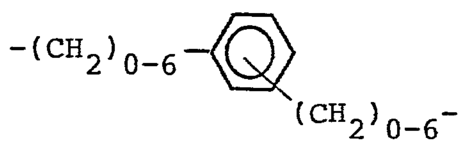

steht, $R^1$, $R^2$ und $R^3$ gleich oder verschieden sein können und die freien Valenzen der Sauerstoffatome entweder durch Siliciumatome weiterer Gruppen der Formel (2) und/oder durch vernetzende Brückenglieder der Formeln

$$SiO_{4/2} \quad \text{oder} \quad SiR'O_{3/2} \quad \text{oder} \quad SiR'_2O_{2/2} \qquad (3)$$

abgesättigt sind, wobei R' für eine Methyl- oder Ethylgruppe steht und das Verhältnis zwischen den Siliciumatomen in Formel (2) zu den Siliciumatomen der Brückeneinheiten nach Formeln (3) von 1 : 0 bis 1 : 10 betragen kann,

$R^4$ denselben Bedeutungsumfang haben kann wie $R^1$, $R^2$ und $R^3$ oder für Wasserstoff, eine 1 bis 10 C-Atome enthaltende lineare oder verzweigte Alkylgruppe, eine 5 bis 8 C-Atome enthaltende Cycloalkyl- oder die Benzylgruppe steht,

$Y^{x-}$ für $PtCl_4^{2-}$ oder $PtCl_6^{2-}$

$PtBr_4^{2-}$ oder $PtBr_6^{2-}$

und für ein anorganisches, 1- bis 3-wertiges Anion einer anorganischen Protonensäure, die mit Aminbasen stabile Salze zu bilden imstande ist, oder die Hydroxygruppe steht und

x eine Zahl von 1 bis 3 bedeutet.

2. Verfahren zur Herstellung von 3-Chlorpropyltrichlorsilan nach Anspruch 1, dadurch gekennzeichnet, daß das molare Verhältnis zwischen den komplexen Anionen des Platins und den anorganischen, 1- bis 3-wertigen Anionen bzw. der Hydroxidgruppe 1: 0 bis 1 : 10 betragen kann.

3. Verfahren gemäß Ansprüchen 1 und 2, dadurch gekennzeichnet, daß $R^1$, $R^2$ und $R^3$ miteinander identisch sind und $R^4$ gleich Methyl ist.

4. Verfahren gemäß Ansprüchen 1 bis 3, dadurch gekennzeichnet, daß Trichlorsilan und Allylchlorid miteinander in Gegenwart einer Platin-haltigen Organosiloxan-Ammoniumverbindung, bestehend aus Einheiten der Formel

$$\left[(H_3C)N(CH_2CH_2CH_2SiO_{3/2})_3\right]_x^+ Y^{x-} \qquad (4)$$

umgesetzt werden, wobei $Y^{x-}$ für $PtCl_4^{2-}$ und für Chlorid steht, und die freien Valenzen der Si-ständigen Sauerstoffatome entweder durch Siliciumatome weiterer Gruppen der Formel (4) und/oder durch vernetzende Brückenglieder der Formel $SiO_{4/2}$ abgesättigt sind, wobei das Verhältnis zwischen den Si-Atomen in (4) zu den Si-Atomen der Brückenglieder $SiO_{4/2}$ von 1 : 0,1 bis 1 : 10 betragen kann.

5. Verfahren gemäß Ansprüchen 1 bis 4, dadurch gekennzeichnet, daß der Platin-Gehalt der polymeren Organosiloxan-Ammoniumverbindung 2 bis 20 Gew.% beträgt.

6. Verfahren gemäß Ansprüchen 1 bis 5, dadurch gekennzeichnet, daß die polymere Platin-haltige Organosiloxan-Ammoniumverbindung als Suspensionskatalysator eingesetzt wird.

7. Verfahren gemäß Ansprüchen 1 bis 6, dadurch gekennzeichnet, daß die Umsetzung von Trichlorsilan mit Allylchlorid bei Normaldruck erfolgt, wobei man das in der Nebenreaktion gebildete Propen aus der Reaktionssuspension über einen Kühler entweichen läßt.

8. Verfahren gemäß Ansprüchen 1 bis 7, dadurch gekennzeichnet, daß es kontinuierlich durchgeführt wird.

9. Verfahren nach den Ansprüchen 1 bis 8, dadurch gekennzeichnet, daß Trichlorsilan und Allylchlorid in einem Temperaturbereich von 70 bis 130° C umgesetzt werden.

10. Verfahren gemäß Ansprüchen 1 bis 9, dadurch gekennzeichnet, daß der verwendete Überschuß an Trichlorsilan gegenüber Allylchlorid 5 bis 20 Mol % beträgt.